# EUROPÄISCHE PATENTANMELDUNG

(11) **EP 1 021 059 A1**
(43) Veröffentlichungstag der Anmeldung: **19.07.2000**
(21) Anmeldenummer: 99101001.8
(22) Anmeldetag: 18.01.1999
(51) Int. Cl.: H04Q 11/04

(54) **Reservierungsverfahren in digitalen Datenübertragungsnetzen und Datenvermittlungsstelle**

(71) Anmelder: SIEMENS AKTIENGESELLSCHAFT, 80333 München (DE)
(72) Erfinder: Grossmann, Bernd, 81675 München (DE)

(57) **Zusammenfassung**

Die Erfindung betrifft ein Verfahren zur Reservierung von Übertragungskapazitäten und zur Auswahl von Anforderungen für zu übertragende Datenströme unterschiedlicher Bandbreite in digitalen Datenübertragungsnetzen. Außerdem betrifft die Erfindung eine Datenvermittlungsstelle.

Das Verfahren und die Datenvermittlungsstelle sind dadurch gekennzeichnet, daß eine Anforderung zur Übertragung von Daten mit einer bestimmten Bandbreite nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate für die anfordernde Bandbreite oder Bandbreitengruppe ist.

## Beschreibung

Die Erfindung betrifft ein Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate, wobei eine bestimmte Übertragungskapazität zur Verfügung steht, die kleiner oder gleich der maximalen Übertragungsrate ist, wobei weiterhin bestimmte Bandbreiten oder Bandbreitengruppen bestimmte Datenübertragungsraten in Benutzung haben, für bestimmte Bandbreiten oder Bandbreitengruppen bᵢ bestimmte Datenübertragungsraten rᵢ reserviert werden, und eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden. Außerdem betrifft die Erfindung eine Datenvermittlungsstelle.

Im Rahmen digitaler Datenübertragungsnetzwerke, wie bei digitalen drahtgebundenen Telekommunikationsnetzen, Mobilfunknetzen oder ATM-Netzen, besteht das Problem einer sinnvollen Aufteilung der gesamten Datenübertragungskapazität auf verschiedene Dienste unterschiedlicher Bandbreite. Ein Beispiel hierfür ist das ISDN (Integrated Digital Services Network), welches parallel Sprachdatenverkehr mit 1x64kbit/s, reinen Datenverkehr mit 128kbit/s=2x64kbit/s und Videosignale mit 384kbit/s=6x64kbit/s überträgt. Wählen sich gleichzeitig mehrere Nutzer für die einzelnen Dienste ein, so muß ein Entscheidungskriterium vorliegen, nach dem die Anforderungen zur Datenübertragung der Nutzer geregelt werden und die gesamte Datenübertragungskapazität auf die Dienste und innerhalb der Dienste unterschiedlicher Bandbreite verteilt wird.

Es liegt auf der Hand, daß die Art der Verteilung der Datenübertragungskapazität auf die einzelnen Dienste ein wesentliches Kriterium für die Effektivität und Betriebssicherheit des Datennetzes darstellt. Durch das Verteilungskriterium soll erreicht werden, daß das Netz:
- effektiv und mit geringer Blockierungswahrscheinlichkeit auch am Rande seiner Auslegungskapazität arbeiten soll
- flexibel auf unterschiedliche Lastanforderungen unterschiedlicher Bandbreiten reagieren soll
- sich stabil bei kleinen Abweichungen gegenüber seiner Auslegungskapazität verhalten soll
- eine große Überlast bei einer Bandbreite keine Blockierung anderer Bandbreiten auslösen soll
- sowohl Bandbreiten unterschiedlicher Größe annähernd chancengleich behandelt werden sollen ("fairness") und
- die Verwaltung des Datenverkehrs einfach sein soll.

Um die oben genannten Kriterien weitgehend zu erfüllen, können unterschiedliche Verteilungskriterien und Algorithmen verwendet werden.

Beispielsweise können jeder Bandbreite eindeutig bestimmte Übertragungskanäle zugeordnet werden. Hierdurch wird jegliche Blockade einer Bandbreite durch eine andere Bandbreite unterbunden. Der Nachteil ist hierbei, daß keinerlei Flexibilität zur Aufteilung der Übertragungskapazität besteht und damit bei wechselnden Anforderungen eine uneffektive Arbeitsweise entsteht.

Eine andere Möglichkeit besteht darin, daß die gesamte Übertragungskapazität allen Bandbreiten uneingeschränkt bis zur Kapazitätsgrenze zur Verfügung steht. Hierdurch kann zwar eine optimale Auslastung erreicht werden, jedoch besteht die Möglichkeit, daß die Übertragung einzelner Bandbreiten durch die starke Nutzung des Datennetzes durch andere Bandbreiten blockiert wird. Wird in einer Verbesserung dieses Verfahrens jeder einzelnen Bandbreite eine maximale Kapazität reserviert, so führt dies zu einem guten Schutz gegen Blockierungen zwischen den Bandbreiten, jedoch zu geringer Effizienz des Systems.

Eine weitere Möglichkeit liegt darin, die gesamte Übertragungskapazität grundsätzlich allen Bandbreiten zur Verfügung zu stellen, aber Anforderungen zur Datenübertragung einer bestimmten Bandbreite zu unterbinden, sobald die gesamte freie Datenübertragungskapazität einen bestimmten Schwellenwert unterschreitet. Diese Methode wird "sum limitation" oder "trunk reservation" genannt und wird meistens zusammen mit Prioritätszuweisungen für bestimmte Anforderungen verwendet. Der Nachteil dieser Methode liegt darin, daß auch bei hohen Überlasten bestimmter Bandbreiten weiterhin Reservierungen aufrecht erhalten werden und dadurch freie Kapazität verschwendet wird. Hierdurch ergeben sich höhere Blockierungswahrscheinlichkeiten für die jeweils anderen Bandbreiten.

Eine der Erfindung am nächsten kommende Methode zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate ist aus der Europäischen Patentanmeldung EP 0 449 480 A3 bekannt. In dieser Schrift wird vorgeschlagen eine Anforderung zur Übertragung von Daten mit einer bestimmten Bandbreite bⱼ nur dann anzunehmen, wenn vorgegebene Kriterien bezüglich der Auslastung des Datennetzes erfüllt sind. Hierbei werden diverse Kriterien vorgeschlagen, die sich alle auf eine dynamisch variierende, gesamte reservierte Datenübertragungskapazität beziehen.

Es ist Aufgabe der Erfindung ein weiteres Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate mit einem verbesserten und vereinfachten Kriterium für die Annahme oder Ablehnung einer Anforderung zur Datenübertragung anzugeben. Es ist weiterhin Aufgabe der Erfindung eine Datenvermittlungsstelle anzugeben, welche einen verbesserten Algorithmus für die Annahme oder Ablehnung einer Anforderung zur Datenübertragung aufweist.

Demgemäß schlägt der Erfinder vor, das bekannte Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate, bei dem eine bestimmte Übertragungskapazität zur Verfügung steht, die kleiner oder gleich der maximalen Übertragungsrate ist, weiterhin bestimmte Bandbreiten oder Bandbreitengruppen bestimmte Datenübertragungsraten in Benutzung haben, für bestimmte Bandbreiten oder Bandbreitengruppen bᵢ bestimmte Datenübertragungsraten rᵢ reserviert werden, und eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden, dahingehend zu verbessern, daß eine Anforderung zur Übertragung von Daten mit einer bestimmten Bandbreite bⱼ nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate rⱼ für die anfordernde Bandbreite oder Bandbreitengruppe bⱼ ist.

Vorteilhaft enthält der Algorithmus des erfindungsgemäßen Verfahrens mindestens die folgenden Verfahrensschritte:
- für n Bandbreiten oder Bandbreitengruppen bᵢ (mit i= 1 bis n) werden bestimmte Datenübertragungsraten rᵢ (mit i= 1 bis n) reserviert,
- es werden Schwellenwerte pᵢ (mit i= 1 bis n) für jede bestimmte Bandbreite oder Bandbreitengruppe bᵢ festgelegt,
- es wird die Belastung sᵢ des Datenübertragungsnetzes bezüglich der einzelnen Bandbreiten bᵢ beobachtet, wobei
- bei einer Überschreitung einer Belastung sⱼ des Schwellwertes pⱼ (mit j Element der Werte i) der Bandbreite oder Bandbreitengruppe bⱼ die Reservierung von Datenübertragungsraten rⱼ für diese Bandbreite oder Bandbreitengruppe bⱼ aufgehoben wird, und
- die Anforderung zur Übertragung von Daten mit dieser bestimmten Bandbreite oder Bandbreitengruppe bⱼ nur dann akzeptiert wird, wenn die dann zur Verfügung stehende nicht belegte Datenübertragungskapazität auch nach der Annahme der Anforderung noch alle Reservierungen rₖ (mit k= 1 bis j-1 und j+1 bis n) aller übrigen Bandbreiten oder Bandbreitengruppen bₖ mit nicht aufgehobenen Reservierungen erfüllen kann.

Eine vorteilhaften Ausgestaltung des Verfahrens kann darin bestehen, daß die reservierten Datenübertragungsraten rᵢ ganzzahlige Vielfache (mit ri=n*bi und n=0,1,2,...) der jeweiligen Bandbreiten oder der größten Bandbreite der jeweiligen Bandbreitengruppe bᵢ sind. Durch diese Maßnahme wird erreicht, daß keine unnötige Kapazität bei den reservierten Datenübertragungsraten rᵢ verschwendet wird.

Eine andere Verbesserung des erfindungsgemäßen Gedankens besteht darin, daß zumindest für eine Bandbreite bᵢ ein zweiter Schwellenwert ppᵢ bestimmt wird, der kleiner als der erste Schwellenwert pᵢ ist, und bei Erreichen dieses Schwellenwertes ppi der genutzten Datenübertragungslast sᵢ der Wert der reservierten Datenübertragungskapazität rᵢ reduziert wird.

Entsprechend den derzeitigen Datenübertragungsstandards ist es vorteilhaft, wenn die Bandbreiten bᵢ als ganzzahlige Vielfache von 64kbit/s (Nx64kbit/s) angenommen werden.

Das erfindungsgemäße Verfahren kann vorteilhaft in einem digitalen Telekommunikationsnetz, insbesondere einem ISDN-Netz, einem digitalen Mobilfunknetz, oder auch in einem ATM-Netz (ATM=asynchronous transfer mode) angewendet werden.

Erfindungsgemäß wird auch eine Datenvermittlungsstelle vorgeschlagen, die zur Lösung der Aufgabe der Erfindung Mittel aufweist, welche das oben dargestellte Verfahren durchführen. Diese Mittel bestehen im wesentlichen aus Mikroprozessor gesteuerten Vermittlungseinrichtungen, deren Programmierung Algorithmen nach dem erfindungsgemäßen Verfahren aufweist.

Weitere Ausgestaltungen, zusätzliche Merkmale und Vorteile der Erfindung ergeben sich aus der nachfolgenden Beschreibung eines bevorzugten Ausführungsbeispiels unter Bezugnahme auf die Zeichnungen und aus den Unteransprüchen.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Die Erfindung soll nachfolgend, anhand der Zeichnung, näher erläutert werden.

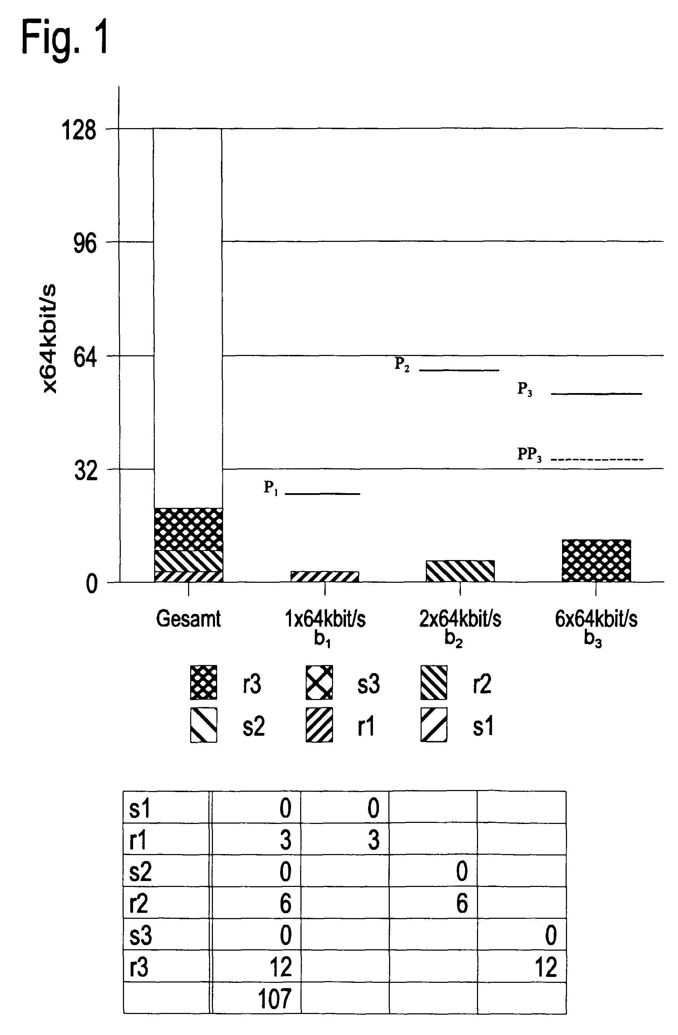

Figur 1-6: Schematische Darstellung unterschiedlicher Lastsituationen eines Datenübertragungsnetzes.

Die Figur 1 zeigt schematisch die Auslastungs- und Reservierungssituation einer Datenübertragungsstrecke, bei der kein Datenverkehr stattfindet. Auf der Ordinate ist die Datenübertragungskapazität in ganzzahligen Vielfachen von 64kbit/s aufgetragen und auf der Abszisse ist in einem Balkendiagramm die gesamte Kapazität des Datenübertragungssystemes gezeigt, wobei innerhalb der Gesamtkapazität die einzelnen reservierten Datenübertragungskapazitäten r₁ bis r₃ schraffiert dargestellt sind. Rechts daneben sind die von den einzelnen Bandbreiten b₁ bis b₃ genutzten und reservierten Übertragungskapazitäten, aufgestellt.

Beispielhaft sind nochmals getrennt drei Brandbreiten b₁ mit einmal 64kbit/s, b₂ mit zweimal 64kbit/s und b₃ mit sechsmal 64kbit/s gezeigt. Da im vorliegenden Falle kein Datenverkehr stattfindet, bestehen die Balken über den entsprechenden Bandbreiten jeweils nur aus der reservierten Datenübertragungskapazität r₁ bis r₃. Zusätzlich sind, den entsprechenden Bandbreiten zugeordnet, die Höhe der festgelegten Schwellwerte p₁ bis p₃ und zur Bandbreite b₃ der zweite Schwellenwert pp₃ eingezeichnet.

Außerdem sind in dieser und in allen anderen Figuren die Schraffurbeziehungen und darunter in einer Tabelle die Zahlenwerte der korrespondierenden Balken dargestellt.

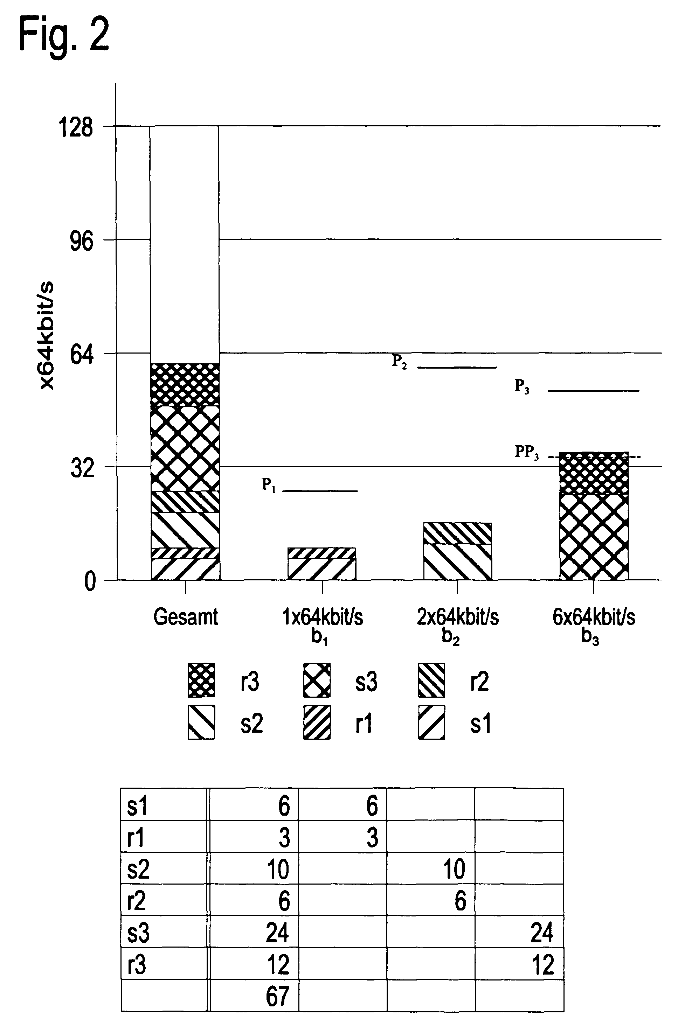

Die Figur 2 zeigt eine Lastsituation des Datenübertragungsnetzes mit geringer Last. Der linke Balken zeigt die gesamte Datenübertragungskapazität mit ihrer Aufteilung in die genutzten Bereiche s₁ bis s₃ und die reservierten Bereiche r₁ bis r₃ der einzelnen Bandbreiten und eine zusätzlich freie Datenübertragungskapazität, die für alle zur Verfügung steht. Auf der rechten Seite sind die entsprechenden Aufteilungen den einzelnen Bandbreiten b₁ bis b₃ zugeordnet. In den Bandbreiten sind jeweils die einzelnen genutzten Datenübertragungskapazitäten s₁ bis s₃ dargestellt und die zur jeweiligen Bandbreite zugeordnete, reservierte Datenübertragungskapazität r₁ bis r₃. Außerdem sind die vorgegebenen Schwellwerte p₁ bis p₃ für die einzelnen Bandbreiten angegeben. Zusätzlich ist auch noch bei der Bandbreite b₂ ein zweiter Schwellwert pp₂ dargestellt, ab dem sich die reservierte Datenübertragungskapazität dieser Bandbreite verringert. Alle Bandbreiten sind relativ gering ausgelastet, so daß die Summe der reservierten Bandbreiten rᵢ bis r₃ wesentlich kleiner als die freie, allen Bandbreiten zugängliche Datenübertragungskapazität ist. In keiner Bandbreite ist die Schwelle pᵢ erreicht und kein Schutzmechanismus ist in Kraft. Neue Anforderung zur Datenübertragung können also ohne Einschränkung angenommen werden.

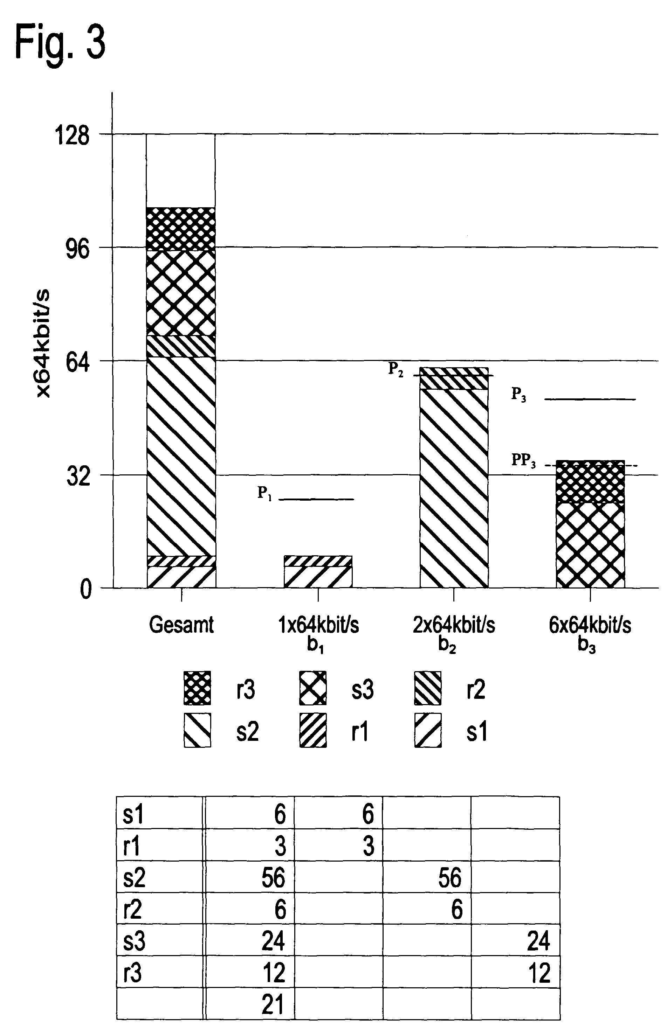

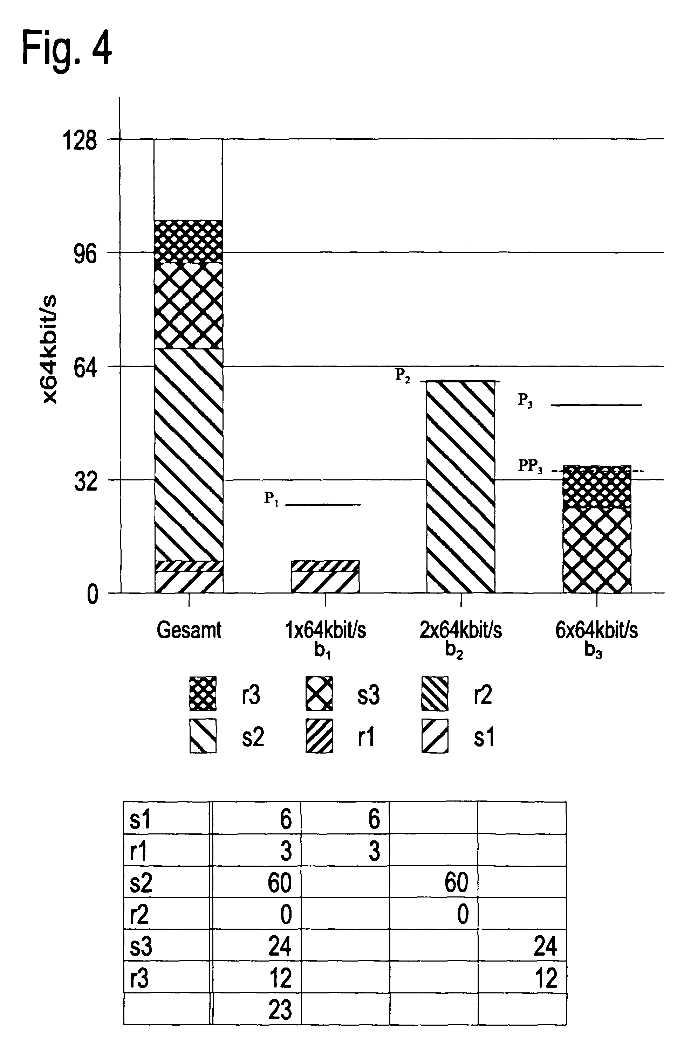

Die Figur 3 zeigt eine Lastsituation des Datenübertragungsnetzes, bei der in der Bandbreite b2 schon ein Datenverkehrsaufkommen herrscht, das kurz unterhalb der Schwelle p2 liegt. Wird nun eine weitere Anforderung zur Datenübertragung für diese Bandbreite b₂ gestellt, so ergibt sich erfindungsgemäß eine Situation, die in Figur 4 dargestellt ist. Die Anforderung für b2 wurde hier zwar angenommen, da die Größe der gesamten nicht genutzten Datenübertragungskapazität größer ist als die Summe der reservierten Datenübertragungskapazitäten r₁ und r₃ der anderen Bandbreiten. Jedoch wird, da die Schwelle p₂ für b₂ überschritten wurde, die Auflösung des reservierten Datenübertragungskapazität r₂ bewirkt und somit zusätzliche frei verfügbare Datenübertragungskapazität freigesetzt.

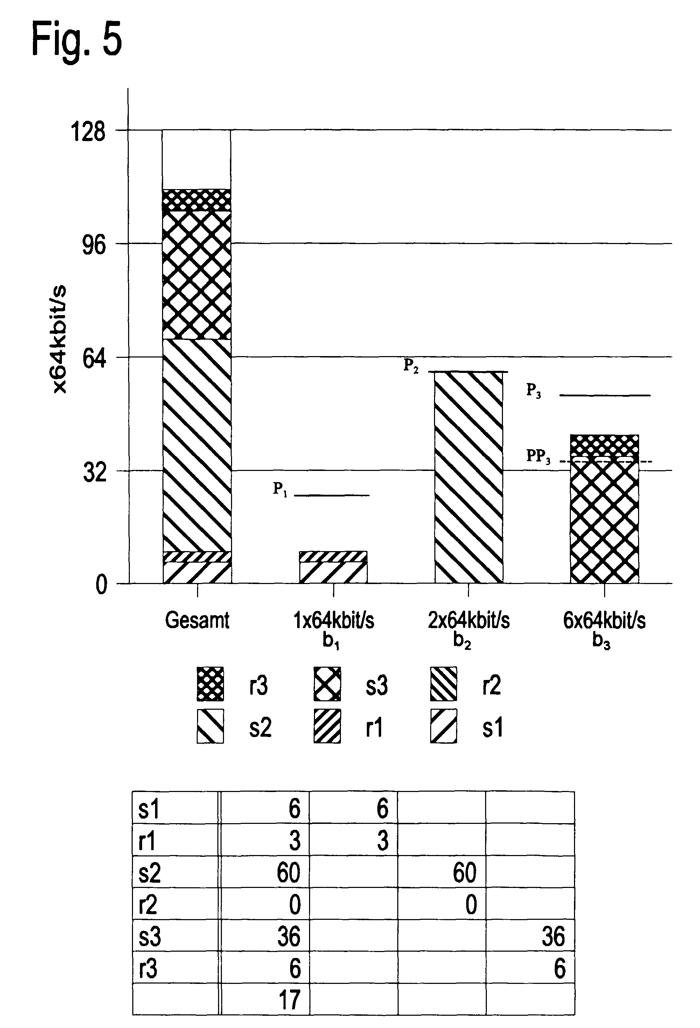

In der Figur 5 ist schließlich anhand der Bandbreite b₃ gezeigt, welche Auswirkung das Überschreiten des zweiten Schwellwertes pp₃ - falls ein derartiger Schwellwert bestimmt ist - für die reservierte Datenübertragungskapazität r₃ hat. Beim Überschreiten dieses Schwellwertes pp₃, wie er in dieser Figur gezeigt ist, reduziert sich die reservierte Datenübertragungskapazität r₃ um einen bestimmten Faktor, hier um die Hälfte. Durch diese Reduktion der reservierten Kapazitäten erhöht sich der frei verfügbare Bereich entsprechend und stellt in Hochlastsituationen etwas mehr freie Datenübertragungskapazität für alle Bandbreiten zur Verfügung.

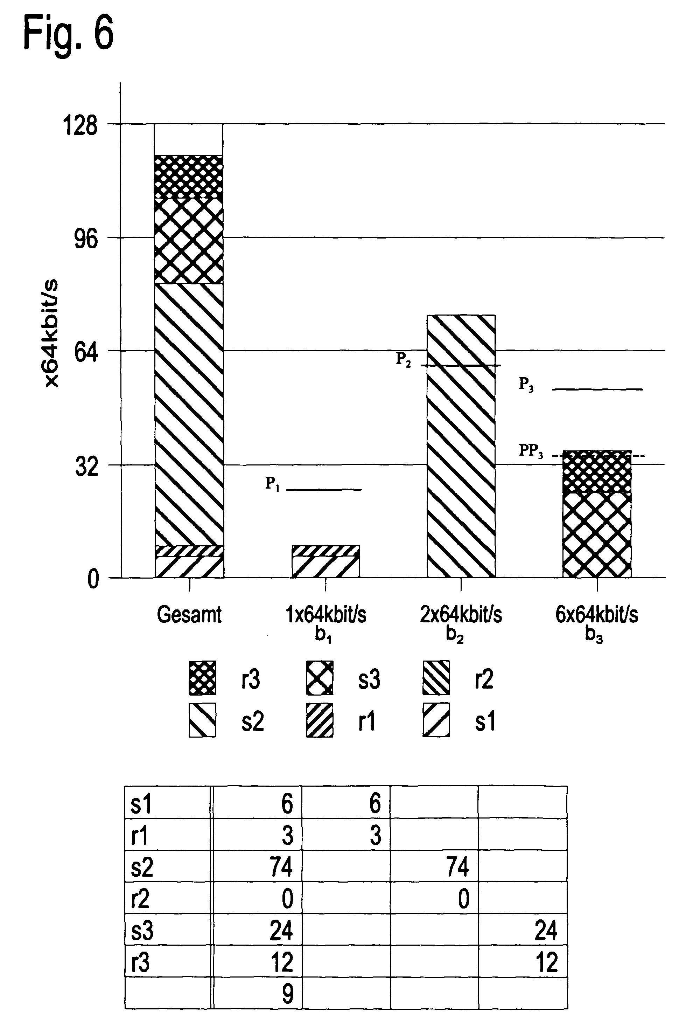

Obwohl in den Figuren 3-5 die Lastsituation des Datenübertragungsnetzes schon relativ hoch und teilweise die Reservierungen für Datenübertragungskapazität aufgehoben ist, können jedoch für alle Bandbreiten noch Anforderungen zur Datenübertragung angenommen werden, da trotz der zusätzlichen Übertragung noch die nicht genutzte Kapazität des Datenübertragungsnetzes größer als die reservierten Kapazitäten der jeweils anderen Bandbreiten bleibt. Diese Situation ändert sich jedoch bei einer Lastsituation, wie sie in der Figur 6 gezeigt ist. Hier ist die Last auf den Bandbreiten b₁ und b₂ so gering, daß die Reservierungen r₁ und r3 aktiv sind. Gleichzeitig ist die Belastung durch die Bandbreite b₂ so groß, daß hier keine Reservierung mehr besteht. Außerdem ist durch die starke Auslastung die freie Datenübertragungskapazität stark geschrumpft.

Entsprechend dem Erfindungsgedanken wird unter dieser Lastsituation eine Anforderung für eine weitere Datenübertragung mit der Bandbreite b₂ abgelehnt, da nach einer gedachten Annahme der Anforderung die Summe aus r₁ und r₃ kleiner als die dann noch verbleibende, nicht genutzte Kapazität wäre.

Eine andere Anforderung für eine weitere Datenübertragung mit der Bandbreite b₁ würde angenommen werden, da nach einer gedachten Annahme dieser Anforderung die Summe aus r₂ und r₃ - wobei r₂ den Wert 0 hat, da diese Reservierung bereits aufgehoben ist - größer als die dann noch verbleibende, nicht genutzte Kapazität wäre. Ebenfalls würde eine mögliche Anforderung zur Datenübertragung mit der Bandbreite b₃ aufgrund der gleichen Kriterien angenommen werden.

Insgesamt wird also durch das erfindungsgemäße Verfahren beziehungsweise auch durch eine, mit Mitteln zur Durchführung dieses Verfahrens ausgestattete Vermittlungsstelle, erreicht, daß das Datenübertragungsnetz effektiv und mit geringer Blockierungswahrscheinlichkeit auch am Rande seiner Auslegungskapazität arbeitet, flexibel auf unterschiedliche Lastanforderungen unterschiedlicher Bandbreiten reagiert, sich stabil bei kleinen Abweichungen gegenüber seiner Auslegungskapazität verhält, bei großer Überlast einer Bandbreite keine Blockierung anderer Bandbreiten auslöst, sowohl Bandbreiten unterschiedlicher Größe annähernd chancengleich behandelt, sich also "fair" verhält und schließlich aufgrund des einfachen Algorithmus eine sehr einfache Verwaltung des Datenverkehrs erlaubt.

## Patentansprüche

1. Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate bₘₐₓ, wobei
- eine bestimmte Übertragungskapazität zur Verfügung steht, die kleiner oder gleich der maximalen Übertragungsrate bₘₐₓ ist,
- bestimmte Bandbreiten oder Bandbreitengruppen bᵢ Datenübertragungsraten sᵢ in Benutzung haben,
- für bestimmte Bandbreiten oder Bandbreitengruppen bᵢ bestimmte Datenübertragungsraten rᵢ reserviert werden,
und eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden,
dadurch gekennzeichnet, daß
eine Anforderung zur Übertragung von Daten mit einer bestimmten Bandbreite bj nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate rⱼ für die anfordernde Bandbreite oder Bandbreitengruppe bⱼ ist.

2. Verfahren gemäß Anspruch 1 dadurch gekennzeichnet, daß die folgenden Verfahrensschritte enthalten sind:
2.1 für n Bandbreiten oder Bandbreitengruppen bᵢ (mit i= 1 bis n) werden bestimmte Datenübertragungsraten rᵢ (mit i= 1 bis n) reserviert,
2.2 es werden Schwellenwerte pᵢ (mit i= 1 bis n) für jede bestimmte Bandbreite oder Bandbreitengruppe bᵢ festgelegt,
2.3 es wird die Belastung sᵢ des Datenübertragungsnetzes bezüglich der einzelnen Bandbreiten bᵢ beobachtet, wobei
2.4 bei einer Überschreitung einer Belastung sⱼ des Schwellwertes pⱼ (mit j Element der Werte i) der Bandbreite oder Bandbreitengruppe bⱼ die Reservierung von Datenübertragungsraten rⱼ für diese Bandbreite oder Bandbreitengruppe bⱼ aufgehoben wird, und
2.5 die Anforderung zur Übertragung von Daten mit dieser bestimmten Bandbreite oder Bandbreitengruppe bⱼ nur dann akzeptiert wird, wenn die dann zur Verfügung stehende nicht belegte Datenübertragungskapazität auch nach der Annahme der Anforderung noch alle Reservierungen rₖ (mit k= 1 bis j-1 und j+1 bis n) aller übrigen Bandbreiten oder Bandbreitengruppen bₖ mit nicht aufgehobenen Reservierungen erfüllen kann.

3. Verfahren gemäß einem der Ansprüche 1-2, dadurch gekennzeichnet, daß die reservierten Datenübertragungsraten r₁ ganzzahlige Vielfache (mit ri=n*bi und n=0,1,2,...) der jeweiligen Bandbreiten oder der größten Bandbreite der jeweiligen Bandbreitengruppe bᵢ sind.

4. Verfahren gemäß einem der Ansprüche 1-3, dadurch gekennzeichnet, daß im Falle des Akzeptierens einer Anforderung zur Übertragung von Daten mit dieser bestimmten Bandbreite oder Bandbreitengruppe bⱼ der reservierte Bereich der Datenübertragungsrate rⱼ besetzt oder teilbesetzt wird, wenn keine sonstige freie Datenübertragungskapazität mehr vorhanden ist.

5. Verfahren gemäß Anspruch 4, dadurch gekennzeichnet, daß im Falle der vollständigen Nutzung einer reservierten Datenübertragungskapazität rⱼ keine weiteren Anforderungen zur Übertragung von Daten mit dieser Bandbreite oder Bandbreitengruppe bⱼ akzeptiert werden.

6. Verfahren gemäß einem der Ansprüche 2-5, dadurch gekennzeichnet, daß zumindest für eine Bandbreite bᵢ ein zweiter Schwellenwert ppᵢ bestimmt wird, der kleiner als der erste Schwellenwert pᵢ ist, und bei Erreichen dieses Schwellenwertes ppi der genutzten Datenübertragungslast sᵢ der Wert der reservierten Datenübertragungskapazität r₁ reduziert wird.

7. Verfahren gemäß einem der Ansprüche 1-6, dadurch gekennzeichnet, daß die Bandbreiten bᵢ ganzzahlige Vielfache von 64kbit/s (Nx64kbit/s) sind.

8. Verfahren gemäß einem der Ansprüche 1-7, dadurch gekennzeichnet, daß das Datenübertragungsnetz ein digitales Telekommunikationsnetz, insbesondere ein ISDN-Netz ist.

9. Verfahren gemäß einem der Ansprüche 1-7, dadurch gekennzeichnet, daß das Datenübertragungsnetz ein digitales Mobilfunknetz ist.

10. Verfahren gemäß einem der Ansprüche 1-7, dadurch gekennzeichnet, daß das Datenübertragungsnetz ein ATM-Netz ist.

11. Datenvermittlungsstelle, dadurch gekennzeichnet, daß sie Mittel zur Durchführung des Verfahrens gemäß einem der Ansprüche 1-10 aufweist.
